# EUROPEAN PATENT APPLICATION

(11) **EP 1 722 574 A2**
(43) Date of publication of application: **15.11.2006**
(21) Application number: 06112977.1
(22) Date of filing: 24.04.2006
(51) Int. Cl.: H04N 9/28

(54) **Convergence data recovery**

(30) Priority: 30.04.2005 KR 20050036537
(71) Applicant: SAMSUNG ELECTRONICS CO., LTD., Suwon-si Gyeonggi-do 442-742 (KR)
(72) Inventor: Shim, Jae-seung Samsung Raemlan, Gyeonggi-do (KR)
(74) Representative: Derry, Paul Stefan

(57) **Abstract**

A convergence data recovering method and a projection television employing the same are provided. The convergence data recovering method includes storing convergence data in a memory that is recognised as a data matrix, storing reference row data and reference column data corresponding to the data matrix in the memory, calculating comparative row data corresponding to at least one row of the data matrix based on the convergence data of the row, calculating comparative column data corresponding to at least one column of the data matrix based on the convergence data of the column, detecting target data to be recovered according to whether the reference row data and the comparative row data match, and the reference column data and the comparative column data match, and recovering the target data, based on at least one of a comparison of the reference row data and the comparative row data, and a comparison of the reference column data and the comparative column data. Accordingly, target data may be more accurately detected from the convergence data stored in the memory and then recovered.

## Description

The present invention relates to a convergence data recovering method and a projection television employing convergence data recovering. The embodiments of the invention are capable of accurately detecting and recovering damaged data targeted for recovery from convergence data stored in a memory.

A projection television using a cathode ray tube (CRT) projects the colours of red (R), green (G) and blue (B) to display images on a screen, by use of CRTs for the respective colours. The picture quality of this projection television is dependent upon white uniformity (W/U), bright uniformity (B/U), convergence, focus, distortion and so on.

The term "convergence" is defined as "to meet electron beams emitted by respective electron guns for R, G and B at the same point on the screen by the magnetic field of a deflection yoke." However, the electron beams may not be deflected to a desired direction because of an abnormality of the deflection yoke or influence from a magnetic field, thereby causing mis-convergence. The mis-convergence causes images on the screen to be displaced.

A point on which electron beams for R, G and B are precisely met is whitened. The mis-convergence results in degrading the picture quality since the vicinity of the white line is indicated with a coloured line to which any of red, green or blue is added.

A convergence calibration method has been widely used, by which horizontal and vertical positions on the point on which the electron beams emitted from the respective colour CRTs are projected are adjusted by applying calibration currents proper for horizontal and vertical directions to convergence yokes of each colour CRT.

Recently a digital convergence calibration method has been used. That is, convergence data for convergence calibration is stored in a memory such as an electrically erasable and programmable read only memory (EEPROM), and the horizontal and vertical positions of the electron beams emitted from the respective colour CRTs are calibrated based on the convergence data stored in the memory.

However, when the convergence data is stored in the EEPROM as in the conventional convergence calibration method, precise convergence calibration cannot be assured if the convergence data stored in the memory has been damaged or modified for any reason.

Especially, because of inherent properties of CRTs, the memory in which the convergence data is stored may have a risk of being exposed to electric shocks due to a surge. This electric shock would work as a main cause to damage or modify the convergence data stored in the memory.

The invention is concerned with providing a convergence data recovering method and a projection television employing the same, capable of more accurately detecting and recovering damaged data targeted for recovery from convergence data stored in a memory.

According to an aspect of the present invention, there is provided a convergence data recovering method of a projection television, the method comprising storing convergence data in a memory so that the convergence data is recognised as a data matrix, storing reference row data and reference column data corresponding to the data matrix in the memory, calculating comparative row data corresponding to at least one row of the data matrix based on the convergence data of the row, calculating comparative column data corresponding to at least one column of the data matrix based on the convergence data of the column, detecting target data to be recovered according to whether the reference row data and the comparative row data match, and the reference column data and the comparative column data match, and recovering the target data, based on at least one of a comparison of the reference row data and the comparative row data, and a comparison of the reference column data and the comparative column data.

The convergence data of the data matrix comprises one of red horizontal convergence data, red vertical convergence data, green horizontal convergence data, green vertical convergence data, and blue horizontal convergence data, blue vertical convergence data.

The detecting the target data comprises detecting a target row whose reference row data and the comparative row data do not match, from the data matrix, detecting a target column whose reference column data and the comparative column data do not match, from the data matrix, and detecting the convergence data at a position where the target row and the target column intersect on the data matrix as the target data.

The recovering the target data comprises determining at least one of either a deviation between a sum of convergence data of the target row, excluding the target data, and the reference row data corresponding to the target row; and a deviation between a sum of convergence data of the target column, excluding the target data, and the reference column data corresponding to the target column, as the target data.

The detecting the target data further comprises detecting one of the reference row data and the reference column data corresponding to either the target row and the target column which is detected.

The recovering the target data comprises at least one of calculating a sum of the convergence data of the target row and the target column which is detected.

The storing the convergence data in the memory comprises storing at least two of red horizontal convergence data, red vertical convergence data, green horizontal convergence data, green vertical convergence data, blue horizontal convergence data and blue vertical convergence data, in the memory so that the data matrix formed by at least two of the red horizontal convergence data, the red vertical convergence data, the green horizontal convergence data, the green vertical convergence data, the blue horizontal convergence data and the blue vertical convergence data, respectively are recognised as faces of a three dimensional (3D) data matrix.

The recovering method further comprises storing reference face data corresponding to a same row and column of the 3D data matrix in the memory, and calculating a comparative face data corresponding to each face based on the convergence data having the same row and column of the 3D data matrix, wherein the detecting the target data comprises detecting the target data based on at least two of whether the reference row data match the comparative row data, the reference column data match the comparative column data, and the reference face data match the comparative face data.

The recovering the target data is based on at least one of whether the reference row data match the comparative row data, the reference column data match the comparative column data, and the reference face data match the comparative face data.

The detecting the target data comprises detecting at least two of a target row whose reference row data does not match the comparative row data in the 3D data matrix, a target column whose reference column data does not match the comparative column data in the 3D data matrix, and a target face whose reference face data does not match the comparative face data in the 3D data matrix, and detecting the convergence data at the position where at least two of the target row, the target column and the target face intersect.

The recovering the target data comprises determining one of a deviation between a sum of convergence data of the target row, excluding the target data, and the reference row data corresponding to the target row; a deviation between a sum of convergence data of the target column, excluding the target data, and the reference column data corresponding to the target column; and a deviation between a sum of convergence data of the target face, excluding the target data, and the reference face data corresponding to the target face, as the target data.

The detecting the target data further comprises detecting at least one of the reference row data, the reference column data and the reference face data corresponding to one of the target row, the target column and the target face as the target data, if one of the target row, the target column and the target face is detected during the detecting at least two of the target row, the target column and the target face.

The recovering the target data comprises determining the sum of the convergence data of at least one of the target row, the target column and the target face, when a corresponding one of the reference row data, the reference column data and the reference face data are detected to have the target data.

The stored reference row data and reference column data correspond to each row and each column of the data matrix in the memory, the calculating of comparative row data is performed for each row of the data matrix based on the convergence data of each row of the data matrix, and the calculating of comparative column data is performed for each column of the data matrix based on the convergence data of each column of the data matrix.

According to another aspect of the present invention, there is provided a projection television having a plurality of CRTs for plural colours, the projection television comprising a memory which stores convergence data therein so that the convergence data is recognised as a data matrix, and stores reference row data and reference column data corresponding to the data matrix in the memory, a convergence calibration circuit unit which calibrates convergence of the CRTs, and a convergence control unit which, calculates comparative row data corresponding to at least one row of the data matrix based on the convergence data of the row, calculates comparative column data corresponding to at least one column of the data matrix based on the convergence data of the column, detects target data to be recovered according to whether the reference row data and the comparative row data match, and whether the reference column data and the comparative column data match, and recovers the target data, based on at least one of a comparison of the reference row data and the comparative row data, and a comparison of the reference column data and the comparative column data, and controls the convergence calibration circuit unit so that it calibrates the convergence of the CRTs based on the convergence data.

The convergence data of the data matrix comprises one of red horizontal convergence data, red vertical convergence data, green horizontal convergence data, green vertical convergence data, and blue horizontal convergence data, blue vertical convergence data.

A target row is detected from the matrix whose reference row data and the comparative row data do not match, a target column is detected from the matrix whose reference column data and the comparative column data do not match; and the convergence data is detected at a position where the target row and the target column intersect on the data matrix as the target data.

When recovering the target data, the convergence control unit is operative to determine at least one of a deviation between a sum of the convergence data of the target row, excluding the target data, and the reference row data corresponding to the target row; and a deviation between a sum of the convergence data of the target column, excluding the target data, and the reference column data corresponding to the target column, as the target data.

In the memory is stored at least two of red horizontal convergence data, red vertical convergence data, green horizontal convergence data, green vertical convergence data, blue horizontal convergence data and blue vertical convergence data, so that the data matrix is formed by at least two of the red horizontal convergence data, the red vertical convergence data, the green horizontal convergence data, the green vertical convergence data, the blue horizontal convergence data and the blue vertical convergence data, respectively are recognised as faces of a three dimensional (3D) data matrix.

Reference face data is stored to correspond to a same row and column of the 3D data matrix in the memory, and comparative face data is calculated corresponding to each face based on the convergence data having the same row and column of the 3D data matrix, and wherein the target data is detected based on at least two of whether the reference row data match the comparative row data, the reference column data match the comparative column data, and the reference face data match the comparative face data.

Embodiments of the present invention will now be described with reference to the accompanying drawings, in which:
Figure 1 illustrates a construction of a projection television according to the present invention;
Figure 2 illustrates calibration points on the screen of the projection television of Figure 1;
Figure 3 illustrates an example of a data matrix to explain convergence data recovery of a projection television according to the present invention;
Figure 4 is a flow chart to explain convergence data recovery of a first embodiment of projection television according to the present invention; and
Figure 5 illustrates an example of a three-dimensional data matrix to explain convergence data recovery of a second embodiment of projection television according to the present invention.

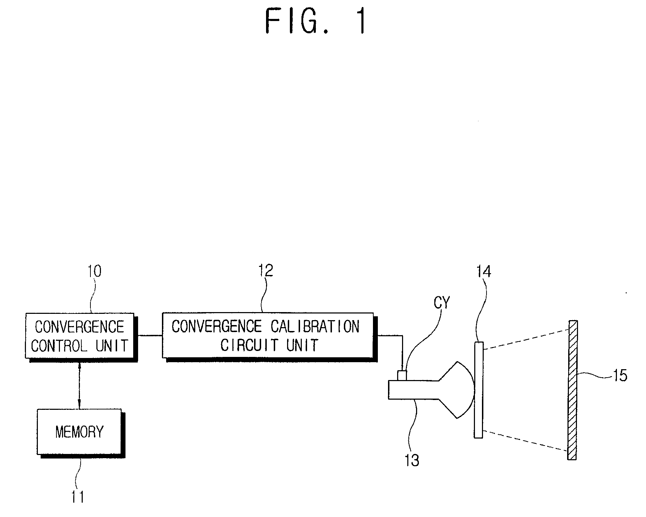

Referring to Figure 1, the projection television comprises CRTs 13 for plural colours, a memory 11, a convergence calibration circuit unit 12 and a convergence control unit 10.

The CRTs 13 may include a CRT 13 for the colour of red, a CRT for the colour of green (not shown), and a CRT for the colour of blue (not shown), respectively emitting electron beams of R, G and B. The electron beams emitted from the respective CRTs 13 are enlarged by a lens unit 14 and projected on the screen 15, thereby allowing images to be displayed on the screen 15. In the projection television, the CRTs are disposed in the rear of the screen 15 by way of example.

However, the CRTs may be disposed in the rear lower part of the screen 15 whereby the electron beams emitted from the CRTs 13 are reflected by reflecting mirrors and projected on the screen 15.

The convergence calibration circuit unit 12 adjusts horizontal and vertical positions of the electron beams emitted from the respective CRTs 13 and projected on the screen 15, by adjusting the intensity of calibration currents to horizontal and vertical directions applied to the convergence yoke CY of each of the CRTs 13.

In the memory 11 is stored convergence data. The convergence data is composed of horizontal and vertical convergence data for convergence calibration of the CRTs 13 for the respective colours, that is, the CRT for the colour of red, the CRT for the colour of green and the CRT for the colour of blue. That is, the convergence data consists of red horizontal convergence data, red vertical convergence data, green horizontal convergence data, green vertical convergence data, blue horizontal convergence data and blue vertical convergence data.

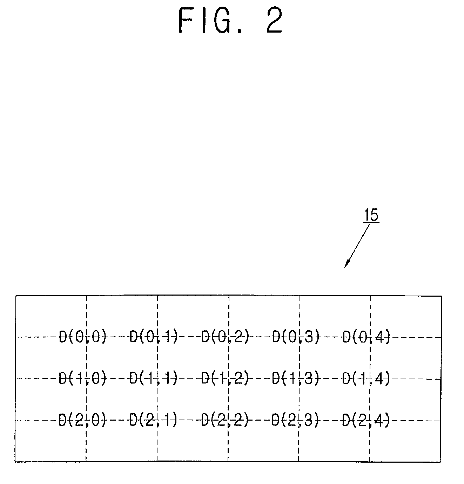

Each of red horizontal convergence data, red vertical convergence data, green horizontal convergence data, green vertical convergence data, blue horizontal convergence data and blue vertical convergence data comprises convergence data for a plurality of calibration points on the screen 15. Figure 2 illustrates the screen 15 on which a total 15 calibration points, 5 horizontal calibration points by 3 vertical calibration points, are set up by way of example. That is, the red horizontal convergence data, red vertical convergence data, green horizontal convergence data, green vertical convergence data, blue horizontal convergence data and blue vertical convergence data have respectively 15 convergence data points.

The convergence control unit 10 controls the convergence calibration circuit unit 12 so that calibration currents are applied to the convergence yoke CY of each CRT 12, based on the convergence data stored in the memory 11. For example, the convergence control unit 10 adjusts the horizontal position of the red electron beam on each calibration point on the screen 15 through the convergence yoke CY of the red CRT 13, based on the red horizontal convergence data stored in the memory 11.

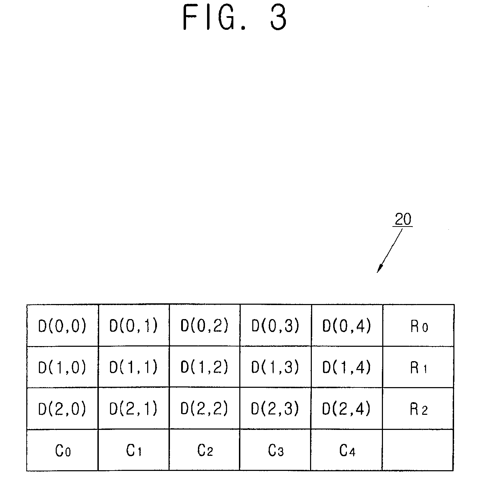

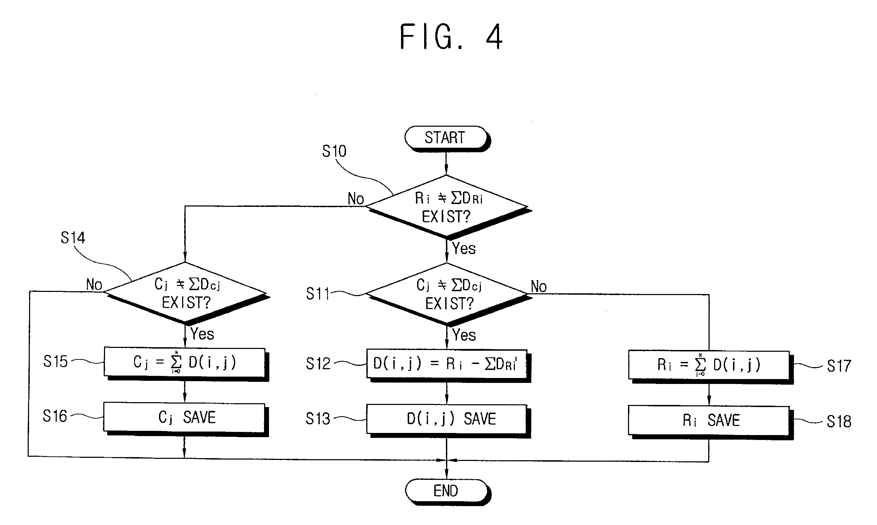

Referring to Figures 3 and 4, a first embodiment of convergence data recovering method of the projection television will be described in more detail. In describing this convergence data recovering method of the projection television, a method of recovering red horizontal convergence data, based on which the horizontal convergence calibration for calibration points of the red CRT 13 is made, will be described by way of example.

The convergence control unit 10 recognises the red horizontal convergence data stored in the memory as a data matrix 20 comprising the red horizontal convergence data to each calibration point as illustrated in Figure 3. That is, the red horizontal convergence data is stored in the memory 11 so that the red horizontal convergence data can be recognised as the data matrix 20 by the convergence control unit 10.

Where the calibration points on the screen 15 have a 5 X 3 matrix structure as illustrated in Figure 2, the red horizontal convergence data can be stored in the memory 11 so as to be recognised as the 5 X 3 matrix, as illustrated in Figure 3.

Reference row data and reference column data to each row and each column of the data matrix 20 are stored in the memory 11. The reference row data to each row is calculated by summing actual values of the red horizontal convergence data constituting the concerned row before damage occurs, among the red horizontal convergence data constituting the data matrix 20, that is, a checksum. In the same manner, the reference column data to each column is calculated by the checksum of the actual values of the red horizontal convergence data constituting the concerned column before damage occurs. According to this, in the case of the 5 X 3 data matrix 20, 3 reference row data and 5 reference column data are stored in the memory 11.

As described above, the red horizontal convergence data is stored in the memory 11 in such a manner that the red horizontal convergence data is recognised as the data matrix 20. Under the condition that the reference row data and the reference column data to each row and each column are stored in the memory 11, the convergence control unit 10 detects damaged target data for recovery, from the red horizontal convergence data, at a regular interval, and recovers the damaged target data.

The convergence data recovering method will be described in detail with reference to Figure 4.

The convergence control unit 10 sums the red horizontal convergence data for each row and calculates row data to be compared ("comparative row data"). The comparative row data being obtained at a point in time after the reference row data is obtained.

The convergence control unit 10 determines whether any row whose reference row data to a corresponding row is not identical to the comparative row data calculated per row, such that a target row for recovery is identified at operation S10. For example, where D(1,2) is damaged, among the red horizontal convergence data, the convergence control unit 10 determines that the comparative row data of the second row is not identical to the reference row data of the second row, and detects the second row as a target row.

Where it is determined that the target row having damage is present, the convergence control unit 10 sums the red horizontal convergence data constituting each column and calculates column data to be compared ("comparative column data"). The comparative column data being obtained at a point in time after the reference column data is obtained. Calculation of the comparative column data to each column may be made prior to comparison of the reference row data with the comparative column data described above.

The convergence control unit 10 detects whether there is present any column whose reference column data to a corresponding column is not identical to the comparative column data calculated to each column, such that a target column for recovery is identified S11. For example, where D(1,2) is damaged among the red horizontal convergence data as described above, the convergence control unit 10 determines that the comparative column data of the third column is not identical to the reference column data to the third column, and detects that the third column is targeted for recovery.

Here, the convergence control unit 10 detects that the red horizontal convergence data at the point where the target row detected in operation S10 and the column detected in operation S11 intersects, that is, on the second row and the third column.

Next, the convergence control unit 10 recovers the target column based on the reference row data or the reference column data at operations S12 and S13. For example, the convergence control unit 10 calculates a deviation between the reference row data to the target row and the sum of values for the red horizontal convergence data, excluding the target data from the red horizontal convergence data constituting the target row, as recovery data to the target data at operation S12, and stores the calculated recovery data in the memory 11 as the target data at operation S13. Or, the convergence control unit 10 may recover the target data in the same manner, by use of the reference column data to the target column.

When no target row is detected in operation S10, the convergence control unit 10 detects whether any target column is present as in operation S11, at operation S14. Where it is determined that no target column is present, the convergence control unit 10 determines that there is no damaged red horizontal convergence data and terminates the recovery process.

However, where any target column is detected in operation S14, that is, only a target column is detected under the condition that any target row is not detected in operation S10, the convergence control unit 10 detects the reference column data of the detected target column as damaged target data. The convergence control unit 10 sums the red horizontal convergence column constituting the target column at operation S15 and stores the summed value in the memory 11 as the value of the reference column data detected as the target data at operation S16.

Where no target column is detected in operation S11, that is, a target row for recovery is detected, the convergence control unit 10 detects the reference row data of the detected target row as damaged target data. The convergence control unit 10 data sums the red horizontal convergence data constituting a target row at operation S17, and stores the summed value in the memory 11 as the value of the reference row data detected as the target data at operation S18.

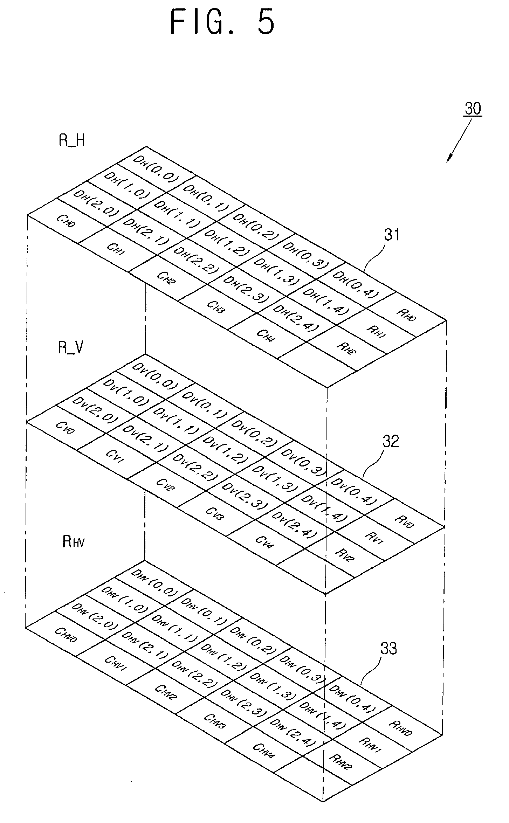

Hereinafter, a second embodiment of convergence data recovering method of a projection television will be described with reference to Figure 5. In the memory 11 of the projection television, according to the second exemplary embodiment of the present invention, is stored two-dimensional (2D) data matrixes formed by each of the red horizontal convergence data, red vertical convergence data, green horizontal convergence data, green vertical convergence data, blue horizontal convergence data and blue vertical convergence data, among which at least two or more of the 2D data matrixes 31 and 32 are stored so as to be recognised as faces of three-dimensional (3D) data matrixes. Here, a construction of 2D data matrixes 31 and 32 corresponds to a construction of the data matrix 20 according to the first exemplary embodiment of the present invention as illustrated in Figure 3, and thus, description thereof will be omitted.

Figure 5 illustrates a 3D data matrix 30 constructed with a 2D data matrix 31 formed by the red horizontal convergence data (hereinafter referred to as "red horizontal data matrix") and a 2D data matrix 32 formed by the red vertical convergence data (hereinafter referred to as "red vertical data matrix"), by way of example. Two or more 2D data matrixes, among six 2D data matrixes formed by red horizontal convergence data, red vertical convergence data, green horizontal convergence data, green vertical convergence data, blue horizontal convergence data and blue horizontal convergence data, may be combined to form the 3D data matrix 30. That is, the 3D data matrix 30 having two or three or more faces can be formed.

A reference face data to faces having the same row and column positions on the 3D data matrix 30 is stored in the memory 11. Referring to Figure 5, the data value of the red horizontal convergence data DH(0,0) of the red horizontal data matrix 31 before they are damaged and that of the red vertical convergence data DV(0,0) of the red vertical data matrix 32 before they are damaged are summed, and the summed value is stored as the reference face data DHv(0,0) to a concerned face. In this manner, 2D reference face data matrix 33 is formed by summing data positioned on the same row and column on the red horizontal data matrix 31 and the red vertical data matrix 32. Here, the reference face data matrix 33 may form the 3D data matrix along with the red horizontal data matrix 31 and the red vertical data matrix 32.

Where any target data is detected, the convergence control unit 10 sums the red horizontal convergence data and the red vertical convergence data constituting each face of the same column and row on the red horizontal data matrix 31 and the red vertical data matrix 32, between the red horizontal convergence data and the red vertical convergence data stored in the memory 11, and calculates comparative face data for each face.

The convergence control unit 10 determines whether the calculated comparative face data and the corresponding reference face data are identical, and detects any face whose comparative face data and the reference face data are not identical as a target face for recovery.

According to this, the convergence control unit 10 substantially detects convergence data on the position where the target row, the target column and the target face intersect as damaged target data, thereby detecting the target data more accurately.

For example, where DV(1,2), DV(1,3) and DV(2,2) on the red vertical data matrix 31 are damaged, two rows and two columns targeted for recovery detected by the red vertical data matrix 32 are respectively detected, and thus, it is difficult to determine whether DV(2,3) is damaged or not. In this case, as three faces targeted for recovery are detected in the 3D data matrix 30, the damaged target data, DV(1,2), DV(1,3) and DV(2,2), are precisely detected from the red vertical data matrix 32.

At this time, the recovery values of the respective target data, that is, DV(1,2), DV(1,3) and DV(2,2), can be calculated through deviations between the concerned reference face data and the red horizontal convergence data on the concerned row and column of the red horizontal data matrix 31.

The convergence data recovering method of the second embodiment projection can also apply to the first embodiment. When the recovering method is applied, application by arbitrary combinations of two of face, row and column, from the 2D data matrix, can be made. In addition, as illustrated in Figure 5, the first recovering method can apply to the reference face data matrix 33.

In the above-described embodiment, the reference row data is set to a summed value of the data of the convergence data on the concerned row before they are damaged, and calculates the comparative row data by summing the convergence data stored in the memory 11, constituting the concerned row, by way of example. However, the reference row data and the comparative row data can be calculated based on the same calculation criteria, but with other calculation methods than the sum, by use of the convergence data constituting the concerned row. This can also apply to the reference column data and the comparative column data, and the reference face data and the comparative face data in the same manner.

As described above, the present invention provides a convergence data recovering method and a projection television employing the same, capable of more accurately detecting damaged target data from the convergence data stored in the memory, and recovering them.

Those skiledl in the art can understand that various replacements, modifications and changes in form and details may be made therein without departing from the scope of the present invention as defined by the claims. Therefore, it is to be appreciated that the above- described embodiment is for purposes of illustration only and not to be construed as a limitation of the invention.

## Claims

1. A convergence data recovering method for use in a projection television, the method comprising:
storing convergence data as a data matrix in a memory;
storing reference row data and reference column data corresponding to the data matrix in the memory;
calculating comparative row data corresponding to at least one row of the data matrix based on the convergence data of the row;
calculating comparative column data corresponding to at least one column of the data matrix based on the convergence data of the column;
detecting target data to be recovered by determining whether the reference row data and the comparative row data match, and whether the reference column data and the comparative column data match; and
recovering the target data, based on at least one of a comparison of the reference row data and the comparative row data, and a comparison of the reference column data and the comparative column data.

2. The method of claim 1, wherein the detecting the target data comprises:
detecting a target row whose reference row data and the comparative row data do not match, from the data matrix;
detecting a target column whose reference column data and the comparative column data do not match, from the data matrix; and
detecting the convergence data at a position where the target row and the target column intersect on the data matrix as the target data.

3. The method of claim 2, wherein the recovering the target data comprises determining at least one of either a deviation between a sum of convergence data of the target row, excluding the target data, and the reference row data corresponding to the target row; and a deviation between a sum of convergence data of the target column, excluding the target data, and the reference column data corresponding to the target column, as the target data.

4. The method of claim 2, wherein the detecting the target data further comprises detecting one of the reference row data and the reference column data corresponding to either the target row and the target column which is detected.

5. The method of claim 4, wherein the recovering the target data comprises at least one of calculating a sum of the convergence data of the target row and the target column which is detected.

6. The method of claim 1, wherein the storing the convergence data in the memory comprises storing at least two of red horizontal convergence data, red vertical convergence data, green horizontal convergence data, green vertical convergence data, blue horizontal convergence data and blue vertical convergence data, in the memory so that the data matrix formed is a three dimensional (3D) data matrix.

7. The method of claim 6, further comprising storing reference face data corresponding to a same row and column of the 3D data matrix in the memory, and calculating a comparative face data corresponding to each face based on the convergence data having the same row and column of the 3D data matrix,
wherein the detecting the target data comprises detecting the target data based on at least two of whether the reference row data match the comparative row data, the reference column data match the comparative column data, and the reference face data match the comparative face data.

8. The method of claim 7, wherein the recovering the target data is based on at least one of whether the reference row data match the comparative row data, the reference column data match the comparative column data, and the reference face data match the comparative face data.

9. The method of claim 8, wherein the detecting the target data comprises:
detecting at least two of a target row whose reference row data does not match the comparative row data in the 3D data matrix, a target column whose reference column data does not match the comparative column data in the 3D data matrix, and a target face whose reference face data does not match the comparative face data in the 3D data matrix; and
detecting the convergence data at the position where at least two of the target row, the target column and the target face intersect.

10. The method of claim 9, wherein the recovering the target data comprises determining one of a deviation between a sum of convergence data of the target row, excluding the target data, and the reference row data corresponding to the target row; a deviation between a sum of convergence data of the target column, excluding the target data, and the reference column data corresponding to the target column; and a deviation between a sum of convergence data of the target face, excluding the target data, and the reference face data corresponding to the target face, as the target data.

11. The method of claim 9, wherein the detecting the target data further comprises detecting at least one of the reference row data, the reference column data and the reference face data corresponding to one of the target row, the target column and the target face as the target data, if one of the target row, the target column and the target face is detected during the detecting at least two of the target row, the target column and the target face.

12. The method of claim 11, wherein the recovering the target data comprises determining the sum of the convergence data of at least one of the target row, the target column and the target face, when a corresponding one of the reference row data, the reference column data and the reference face data are detected to have the target data.

13. The method of any preceding claim, wherein the stored reference row data and reference column data correspond to each row and each column of the data matrix in the memory;
the calculating of comparative row data is performed for each row of the data matrix based on the convergence data of each row of the data matrix; and
the calculating of comparative column data is performed for each column of the data matrix based on the convergence data of each column of the data matrix.

14. A projection television having a plurality of CRTs for plural colours, the projection television comprising:
a memory operable to store convergence data as a data matrix therein , and to store reference row data and reference column data corresponding to the data matrix in the memory;
a convergence calibration circuit unit operable to calibrate convergence of the CRTs; and
a convergence control unit which is operable to:
calculate comparative row data corresponding to at least one row of the data matrix based on the convergence data of the row;
calculate comparative column data corresponding to at least one column of the data matrix based on the convergence data of the column,
detect target data to be recovered according to whether the reference row data and the comparative row data match, and whether the reference column data and the comparative column data match; and
recover the target data, based on at least one of a comparison of the reference row data and the comparative row data, and a comparison of the reference column data and the comparative column data, and
control the convergence calibration circuit unit so that it calibrates the convergence of the CRTs based on the convergence data.
